# FASCICULE DE BREVET EUROPEEN

(11) **EP 3 831 629 B1**
(45) Date de publication et mention de la délivrance du brevet: **10.09.2025**
(21) Numéro de dépôt: 20207941.4
(22) Date de dépôt: 17.11.2020
(51) Int. Cl.: B60J 10/32, B60J 10/75, B29C 45/14, B29C 45/44

(54) **DISPOSITIF D'ÉTANCHÉITÉ BI-INJECTÉ AVEC CROCHET**
BI-INJIIZIERTE ABDICHTVORRICHTUNG MIT HAKEN
BI-INJECTED SEALING DEVICE WITH HOOK

(30) Priorité: 02.12.2019 FR 1913613
(43) Date de publication de la demande: 09.06.2021
(73) Titulaire: Renault s.a.s, 92100 Boulogne Billancourt (FR)
(72) Inventeur: LE COEDIC, Yoann, 78120 Rambouillet (FR); VOIRIN, Michel, 76520 Franqueville saint Pierre (FR)
(74) Mandataire: Renault Group

(56) Documents cités:
- EP-A1- 1 388 449
- EP-A2- 0 732 384
- FR-A1- 2 856 331
- JP-A- 2004 291 704

## Description

### Domaine Technique de l'invention

L'invention concerne un dispositif d'étanchéité pour vitre d'un véhicule automobile. L'invention porte aussi sur un équipement de portière ou sur une portière comprenant un tel dispositif d'étanchéité. L'invention porte également sur un véhicule automobile comprenant un tel dispositif d'étanchéité.

### Etat de la technique antérieure

Pour garantir l'étanchéité des véhicules automobiles, les portières sont généralement équipées d'un dispositif d'étanchéité, couramment dénommé "lécheur de vitre", agencé horizontalement à l'interface entre une vitre et un élément de la portière, notamment un élément de carrosserie de la portière. Un tel dispositif d'étanchéité comprend une lèvre d'étanchéité en contact avec la vitre de la portière. Cette lèvre empêche l'eau ou l'air d'entrer à l'intérieur de l'habitacle tout en permettant un déplacement de la vitre selon un mouvement de translation vertical.

Le dispositif d'étanchéité comprend généralement une pince grâce à laquelle il est fixé à un bord de l'élément de la portière. La pince comprend alors deux branches s'étendant de part et d'autre de l'élément de portière. Par ailleurs, un tel dispositif d'étanchéité est apparent, en particulier depuis l'extérieur du véhicule. Il joue donc un rôle esthétique important dans le design du véhicule.

Les dispositifs d'étanchéité doivent donc répondre à la fois à un objectif de performance d'étanchéité, un objectif esthétique et un objectif de fixation efficace sur l'élément de la portière. Pour répondre à ce triple objectif, on connaît l'utilisation de pinces bi-injectées. De telles pinces sont fabriquées avec deux matériaux distincts injectés dans un même moule d'injection. Elles comprennent une armature et un revêtement recouvrant partiellement l'armature. L'armature assure la fonction de maintien à l'élément de portière et supporte la lèvre d'étanchéité en contact avec la vitre. Le revêtement assure principalement une fonction esthétique.

Le document FR2856331-A1 décrit un tel dispositif d'étanchéité.

Ces dispositifs d'étanchéité présentent néanmoins des inconvénients. En effet, les pinces bi-injectées comprennent des formes tridimensionnelles complexes. Ces pinces doivent être fabriquées dans un moule en trois parties dans lequel deux matériaux distincts doivent être injectés. La fabrication de tels moules est complexe. De plus, lors son démoulage, la pince peut subir des contraintes qui l'endommagent. La qualité de la fixation du dispositif d'étanchéité à l'élément de portière peut ainsi être altéré.

### Présentation de l'invention

Le but de l'invention est de fournir un dispositif d'étanchéité et un procédé de fabrication d'un tel dispositif d'étanchéité remédiant aux inconvénients ci-dessus et améliorant les dispositifs d'étanchéité et les procédés de fabrication connus de l'art antérieur.

Plus précisément, un premier objet de l'invention est un dispositif d'étanchéité qui soit facile à démouler.

Un second objet de l'invention est un dispositif d'étanchéité permettant une fixation simple et fiable à un élément de portière.

Un troisième objet de l'invention est un dispositif d'étanchéité dont l'aspect esthétique peut être facilement contrôlé.

Un quatrième objet de l'invention est un dispositif d'étanchéité garantissant une bonne étanchéité à l'interface entre un élément de portière et une vitre.

### Résumé de l'invention

L'invention se rapporte à un dispositif d'étanchéité pour une vitre d'un véhicule automobile, le dispositif d'étanchéité comprenant une pince bi-injectée, la pince comprenant une armature et un revêtement recouvrant au moins en partie l'armature, l'armature comprenant une première branche et une deuxième branche destinées à s'étendre de part et d'autre d'un bord d'une structure, une première branche de l'armature comprenant un moyen de retenue apte à coopérer avec une ouverture de la structure pour retenir le dispositif d'étanchéité contre la structure, la première branche comprenant une fenêtre s'étendant au-dessus du moyen de retenue, sur toute la hauteur de la première branche.

Le revêtement peut recouvrir une face externe de la deuxième branche de l'armature.

L'armature peut comprendre une base s'étendant entre la première branche et la deuxième branche, la base s'étendant sensiblement perpendiculairement à la première branche et/ou à la deuxième branche, le revêtement recouvrant une face externe de ladite base.

Le dispositif d'étanchéité peut comprendre une lèvre d'étanchéité destinée à entrer en contact avec une vitre, la lèvre d'étanchéité étant fixée, notamment soudée, à une face externe de la première branche.

La première branche peut comprendre un redent agencé à une extrémité inférieure de la première branche, la lèvre d'étanchéité étant positionnée en contact avec ledit redent.

La première branche peut comprendre une face interne s'étendant globalement parallèlement à un plan de référence à hauteur de la fenêtre, et le moyen de tenue peut être saillant vers la deuxième branche par rapport au plan de référence.

L'armature peut être constituée d'un matériau plastique dur, notamment du polypropylène, et le revêtement peut être constitué d'un matériau plus souple, notamment du thermoplastique.

Une face interne de la premier branche et/ou une face interne de la deuxième branche peut comprendre des reliefs destinés à prendre appui sur la structure.

La première branche peut comprendre deux fentes agencées de part et d'autre de la fenêtre, les deux fentes s'étendant depuis une extrémité inférieure de la première branche.

La fenêtre peut s'étendre sur tout la hauteur de la première branche.

L'invention se rapporte également à un équipement de portière pour véhicule automobile, l'équipement de portière comprenant une structure comprenant un bord et une ouverture, une vitre, notamment une vitre mobile en translation entre une position ouverte et une position fermée, et un dispositif d'étanchéité tel que défini précédemment, le dispositif d'étanchéité comprenant une lèvre d'étanchéité en contact avec la vitre, le moyen de retenue du dispositif d'étanchéité coopérant avec l'ouverture pour retenir le dispositif d'étanchéité contre la structure.

La structure peut comprendre une face s'étendant du bord jusqu'à l'ouverture, la face s'étendant globalement parallèlement à un plan.

L'invention se rapporte également à une portière pour véhicule automobile, comprenant un dispositif d'étanchéité tel que défini précédemment, et/ou un équipement de portière tel que défini précédemment.

L'invention se rapporte également à un véhicule automobile comprenant un dispositif d'étanchéité tel que défini précédemment, et/ou un équipement de portière tel que défini précédemment, et/ou une portière telle que définie précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue partielle de côté d'un véhicule automobile selon un mode de réalisation de l'invention.
[Fig. 2] La figure 2 est une vue partielle en perspective, d'un dispositif d'étanchéité selon un mode de réalisation de l'invention, le dispositif d'étanchéité étant fixé à un élément de portière.
[Fig. 3] La figure 3 est une vue en perspective du dispositif d'étanchéité.
[Fig. 4] La figure 4 est une vue schématique selon une coupe B-B du dispositif d'étanchéité, le dispositif d'étanchéité étant fixé à l'élément de portière.
[Fig. 5] La figure 5 est une vue schématique selon une coupe A-A du dispositif d'étanchéité, le dispositif d'étanchéité étant fixé à l'élément de portière.
[Fig. 6] La figure 6 est une vue en perspective d'une pince du dispositif d'étanchéité
[Fig. 7] La figure 7 est une vue schématique en coupe d'une pince du dispositif d'étanchéité, la pince étant dans un moule d'injection selon un mode de réalisation de l'invention, la pince étant vue suivant la coupe B-B.
[Fig. 8] La figure 8 est une vue schématique en coupe de la pince du dispositif d'étanchéité, la pince étant dans le moule d'injection, la pince étant vue suivant la coupe A-A.

### Description détaillée

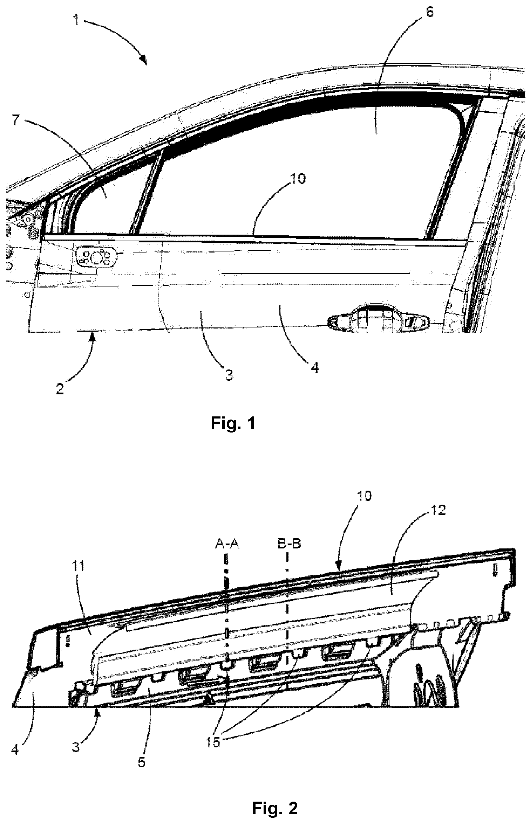

La figure 1 illustre partiellement un véhicule 1 automobile selon un mode de réalisation de l'invention. Le véhicule 1 est un véhicule particulier mais en variante, il pourrait être par exemple un véhicule utilitaire, un camion ou un bus. Le véhicule 1 comprend une portière 2, ou porte latérale. La portière est une portière avant gauche mais l'invention pourra être transposée aux autres portes du véhicule 1. La portière 2 comprend une structure 3 articulée sur une caisse du véhicule. La structure 3 comprend différents éléments tels qu'un élément de carrosserie 4 (apparent depuis l'extérieur du véhicule) et un élément structurel 5, ou doublure, s'étendant parallèlement à l'élément de carrosserie et conférant à la portière une rigidité et une robustesse adéquate. L'élément structurel 5 est notamment visible sur la figure 2. La structure 3 de portière comprend aussi, en partie supérieure, une ouverture (ou fenêtre) dans laquelle est agencée une vitre 6. La vitre 6 peut être coulissée verticalement entre une position fermée (vers le haut) et une position ouverte (vers le bas). En variante ou en complément, la portière peut comprend une vitre fixe par rapport à la structure 3. Selon le mode de réalisation présenté, la portière comprend une vitre auxiliaire fixe 7 positionnée à l'avant de l'ouverture aménagée dans la structure.

Dans ce document, on considère que le véhicule repose sur un sol horizontal. L'axe longitudinal désigne l'axe selon lequel le véhicule progresse en ligne droite. L'axe transversal désigne l'axe horizontal perpendiculaire à l'axe longitudinal.

La portière 2 comprend en outre un dispositif d'étanchéité 10 selon un mode de réalisation de l'invention. Le dispositif d'étanchéité 10 s'étend sensiblement horizontalement le long d'un bord inférieur de l'ouverture pratiquée dans la structure. Le dispositif d'étanchéité est donc aménagé à l'interface entre la structure 3 de la portière et la vitre 6. Vu de l'extérieur, le dispositif d'étanchéité forme une bande de hauteur sensiblement constante sur toute la largeur de la portière.

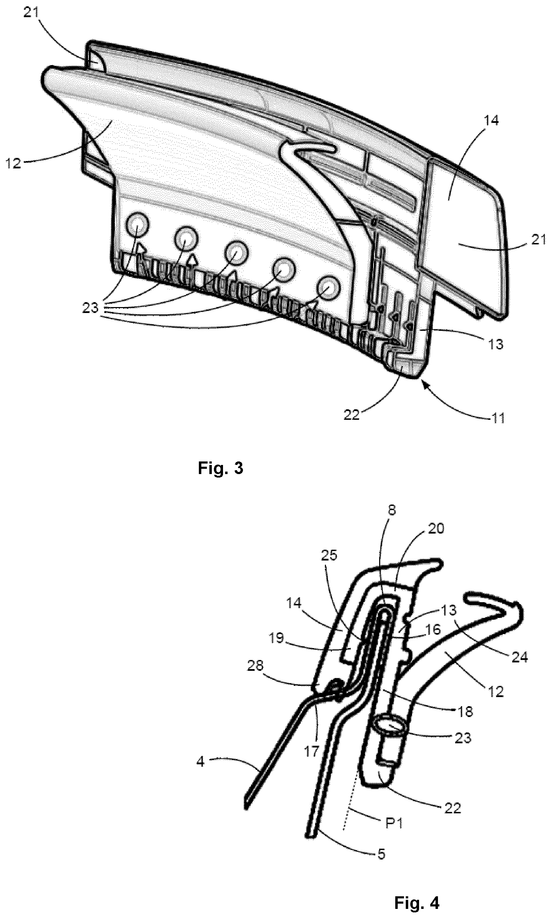

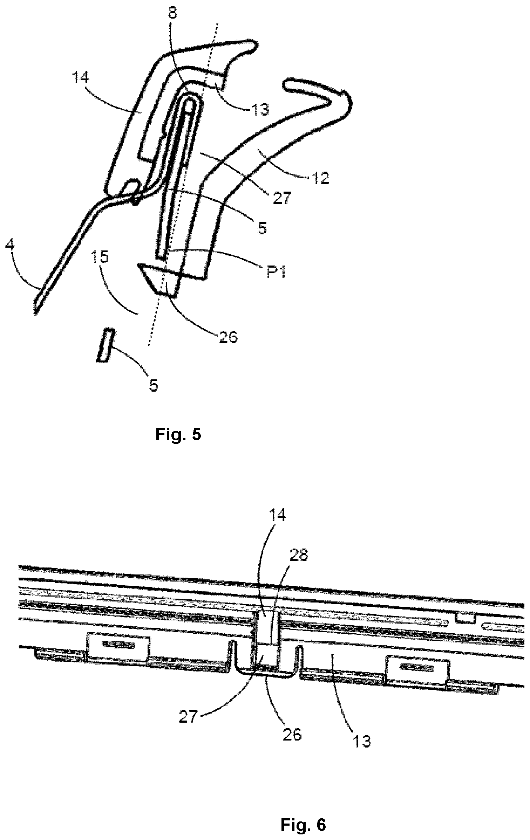

La figure 2 illustre, en vue depuis l'intérieur du véhicule, le dispositif d'étanchéité 10 et une partie de la structure 3 de la portière 2. Le dispositif d'étanchéité est fixé sur un bord 8 de la structure 3, notamment à hauteur d'un bord supérieur de l'élément structurel 5. Le bord 8 est notamment visible sur les figures 4 et 5. Le dispositif d'étanchéité 10 comprend une pince 11 par l'intermédiaire de laquelle il est fixé au bord 8 de la structure 3, et une lèvre d'étanchéité 12 en contact avec les vitres 6 et 7. Comme cela est visible sur la figure 3, la pince 11 comprend une armature 13 en contact avec l'élément structurel 5 et un revêtement 14. Le revêtement 14 constitue la partie visible depuis l'extérieur du dispositif d'étanchéité 10. Le revêtement 14 peut recouvrir une extrémité supérieure de l'élément de carrosserie 4 de la portière 2.

L'élément structurel 5 comprend des ouvertures 15 reparties sur sa longueur. Le dispositif d'étanchéité 10 est fixé à l'élément structurel grâce à des moyens de fixations, notamment des crochets, coopérant avec ces ouvertures 15. Le nombre d'ouvertures 15 et de crochets correspondants peut être quelconque. Il peut être par exemple compris entre trois et sept. Une première coupe A-A selon un plan vertical et transversal du véhicule passe par l'une de ces ouvertures 15. Une deuxième coupe B-B selon un plan vertical et transversal du véhicule est définie en dehors d'une ouverture 15.

La figure 4 illustre plus en détail le dispositif d'étanchéité 10 selon la coupe B-B, le dispositif d'étanchéité étant monté sur le bord 8 de la structure 3. L'élément structurel 5 s'étend globalement parallèlement à un plan longitudinal et vertical. L'élément de carrosserie 4 s'étend sensiblement parallèlement à l'élément structurel du côté extérieur de la portière, c'est-à-dire du côté de la portière tourné vers l'extérieur du véhicule. Le bord 8 est formé par un repli de l'élément de carrosserie recouvrant une extrémité supérieure 16 de l'élément structurel 5. L'élément de carrosserie 4 comprend une courbure 17 libérant un volume pour loger une partie externe du dispositif d'étanchéité. Ainsi, une face externe du revêtement 14 apparait sensiblement dans le prolongement de l'élément de carrosserie. Entre l'ouverture 15 et son extrémité supérieure, l'élément structurel 5 s'étend dans un plan. Ce plan est sensiblement vertical et longitudinal. L'élément structurel 5 comprend donc une forme simple et compacte

L'armature 13 comprend une première branche 18 et une deuxième branche 19 s'étendant de part et d'autre du bord 8. L'armature est donc montée "à cheval" sur une extrémité supérieure de l'élément de carrosserie 4 et sur une extrémité supérieure de l'élément structurel 5. La première branche 18 s'étend sensiblement parallèlement à l'élément structurel, le long du côté de l'élément structurel tourné vers l'habitacle du véhicule. La deuxième branche 19 s'étend sensiblement parallèlement à l'élément structurel, le long du côté de l'élément structurel tourné vers l'extérieur du véhicule. Les deux branches 18, 19, que l'on pourrait également dénommer "segments", sont reliées par une base 20 s'étendant sensiblement horizontalement, au-dessus du bord supérieur de l'élément structurel 5. La base 20 s'étend sensiblement perpendiculairement à la première branche 18 et à la deuxième branche 19. L'armature a donc sensiblement la forme d'un U inversé. Une arrête en angle droit peut être formée à la jonction entre la première branche et la base 20. En remarque, selon le mode de réalisation présenté, la première branche 18 est plus haute que la deuxième branche selon l'axe vertical. En variante, c'est la deuxième branche qui pourrait être plus haute que la première branche ou les deux branches pourraient avoir une hauteur sensiblement identique.

Chacune des deux branches 18, 19 présente une face interne, tournée vers l'élément structurel 5 et une face externe, opposée à la face interne. La face externe de la première branche est tournée vers l'habitacle. La face externe de la deuxième branche 19 est tournée vers l'extérieur du véhicule. La face externe de la base 20 est tournée vers le haut. La face externe de la deuxième branche 19 et la face externe de la base 20 sont recouvertes par le revêtement 14. La face externe de la première branche n'est pas recouverte par le revêtement 14. La face interne de la première branche s'étend parallèlement à un plan de référence P1 sensiblement vertical et longitudinal. La face interne de la première branche de l'armature est en appui transversal sur le bord 8. En remarque, la face interne de la première branche est en appui contre le repli formé à l'extrémité de l'élément de carrosserie 4. En variante, elle pourrait également être en appui directement contre l'élément structurel 5 si l'élément de carrosserie ne présentait pas un tel repli.

La face interne de la première branche et/ou la face interne de la deuxième branche peuvent en outre comprendre des reliefs 25, notamment des godrons, destinés à prendre appui sur l'élément structurel ou sur l'élément de carrosserie 4 afin d'améliorer la tenue de la pince.

Le revêtement 14 s'étend vers le bas jusqu'à venir en contact avec l'élément de carrosserie 4. Au niveau de sa zone de contact avec l'élément de carrosserie, le revêtement 14 comprend une terminaison 28 pourvue d'un profil de déformation, en l'espèce un évidement, qui favorise les déformations du revêtement pour épouser la forme de l'élément de carrosserie 4. Le revêtement 14 se distingue de la lèvre d'étanchéité 12 notamment en ce que le revêtement n'est pas destiné à entrer en contact avec la ou les vitres 7, 8 de la portière. Le revêtement 14 et la lèvre d'étanchéité 12 peuvent être fabriqués dans des matériaux différents. Ils peuvent n'avoir aucun contact entre eux. Aux extrémités avant et arrière du dispositif d'étanchéité (selon l'axe longitudinal), le revêtement 14 peut comprendre des flancs 21 s'étendant parallèlement à un plan vertical et transversal et recouvrant au moins en partie les extrémités avant et arrière de l'armature 13.

L'armature 13 est constituée d'un matériau en plastique dur, notamment du polypropylène, et le revêtement 14 est constitué d'un matériau plus souple, par exemple du type thermoplastique. L'utilisation d'un matériau plus souple pour le revêtement permet de masquer d'éventuels défauts de surface ou défauts géométriques et améliore l'aspect esthétique du dispositif d'étanchéité. L'utilisation d'un matériau plus dur pour l'armature permet d'obtenir une pince suffisamment rigide et donc une fixation robuste de l'élément d'étanchéité 10 au bord 8. La pince 11 comprend donc deux matériaux. Cette pince est dite bi-injectée car les deux matériaux sont injectés de façon successive dans un même moule d'injection comportant notamment des noyaux rotatifs. Cette technique de fabrication permet d'obtenir en une seule étape de fabrication une pince composée deux matériaux distincts. Le revêtement adhère à l'armature sans utilisation d'un moyen de fixation tierce entre les deux éléments, notamment sans colle, sans point de soudure et sans un quelconque moyen de fixation rapporté. Les matériaux sont compatibles chimiquement et adhèrent naturellement entre eux lors de l'opération de bi injection.

La lèvre d'étanchéité 12 est fixée à la première branche 18 de l'armature 13. Une extrémité inférieure de la première branche 18 comprend un redent 22, ou autrement dit une marche, avec lequel la lèvre d'étanchéité est en contact. Le redent forme donc une excroissance saillante vers l'habitacle depuis l'extrémité inférieure de la première branche. La lèvre d'étanchéité est soudée à la face externe de la première branche par différents points de soudure 23. Une partie supérieure de la lèvre d'étanchéité s'étend en oblique par rapport à la première branche. Un volume d'air 24, en forme de V est formé entre la partie supérieure de la première branche et la partie supérieur de la lèvre d'étanchéité. Lors que la vitre 6 prend appui contre la partie supérieure de la lèvre d'étanchéité, celle-ci peut librement se rapprocher de la pince 11, réduisant ainsi le volume d'air 24.

La figure 5 illustre plus en détail le dispositif d'étanchéité 10 selon la coupe B-B. En vis-à-vis de chacune des ouverture 15 dans l'élément structurel 5, la première branche comprend un moyen de retenue 26, et une fenêtre 27. Selon le mode de réalisation présenté, le moyen de retenue est un crochet ou une protubérance saillante vers l'élément structurel 5 depuis l'extrémité inférieure de la face interne de la première branche 18. Autrement dit le crochet est saillant vers la deuxième branche par rapport au plan de référence P1. Chaque moyen de retenue 26 du dispositif d'étanchéité 10 est apte à coopérer avec une ouverture 15 de l'élément structurel pour retenir le dispositif d'étanchéité contre l'élément structurel. Le crochet assure une retenue du dispositif d'étanchéité suivant l'axe vertical. Le crochet peut avoir une section de forme sensiblement triangulaire, il présente une surface d'appui destinée à coopérer avec le bord supérieur de l'ouverture 15.

Chaque fenêtre 27 s'étend au-dessus du crochet respectif, sur toute la hauteur de la première branche. La première branche comprend donc une ouverture qui s'étend depuis moyen de retenue 26 jusqu'à la base 20 de l'armature. Autrement dit encore, la première branche comprend une ouverture ou fenêtre qui s'étend entre le moyen de retenue 26 et la base 20 de l'armature ou sensiblement entre le moyen de retenue 26 et la base 20 de l'armature. Cette fenêtre 27 est notamment bien visible sur la figure 6. En remarque, on distingue à travers cette fenêtre la terminaison 28 du revêtement 14 La fenêtre 27 peut avoir une forme globalement rectangulaire. Le moyen de retenue 26, ou crochet 26, s'étend longitudinalement sur la même largeur que la fenêtre. Une telle largeur permet d'attendre un bon compromis entre une rigidité suffisante de l'armature 13 (imposant une largeur de fenêtre la moins élevée possible) et une bonne tenue de l'armature à l'élément structurel 5 (imposant une largeur de crochet la plus importante possible).

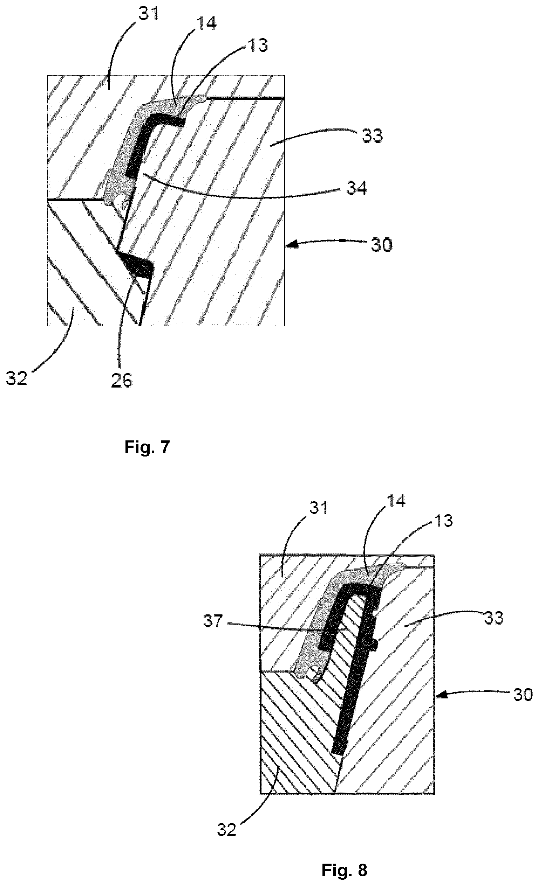

Le fait que la fenêtre 27 s'étende sur tout la hauteur de la première branche rend le procédé de fabrication de la pince par bi-injection plus aisé. En effet pour fabriquer la pince 11, un moule d'injection 30 comprenant les trois parties 31, 32, 33 telles qu'illustré sur la figure 7 peut être utilisé. Au niveau de la coupe A-A, une première partie 31 du moule 30 s'étant le long des faces externes de la deuxième branche 19 et de la base 20. Une deuxième partie 32 du moule 30 s'étend en vis-à-vis de la terminaison 28 du revêtement 14 et en vis-à-vis de l'extrémité inférieure de la deuxième branche, notamment du crochet. Une troisième partie 33 du moule 30 s'étend jusqu'à la face interne de la deuxième branche. La troisième partie 33 du moule comprend donc des protubérances 34, ou créneaux, passant au travers des différentes fenêtres 27. Au niveau de la coupe B-B et comme cela est visible sur la figure 7, la troisième partie 33 du moule 30 s'étend jusqu'à la face externe de la première branche tandis que la deuxième partie du moule s'étend entre la face interne de la première branche et la face interne de la deuxième branche. La deuxième partie 32 du moule comprend donc également des protubérances 37, ou créneaux s'étendant vers le haut entre les deux branches. Ces protubérances 37 sont bien visibles sur la coupe de la figure 8. Les protubérances 34 et 37, ou créneaux, des deuxième et troisième partie du moule sont entrelacées afin de remplir tout le volume compris entre les deux branches.

En référence à la figure 6, la première branche 18 de l'armature 13 comprend en outre deux fentes 35, ou découpes, positionnées de part et d'autre de chaque fenêtre 27. Les fentes 35 s'étendent sensiblement verticalement depuis un bord inférieur de la première branche. Elles s'étendent jusqu'à environ mi-hauteur de la première branche. Les deux fentes 29 délimitent une zone de déformation 36 de la première branche. La présence des fentes facilite des déformations élastiques de la zone de déformation 36 lors de la mise en place du dispositif d'étanchéité sur le bord de la structure. Notamment, elles facilitent le glissement du moyen de retenue 26 le long de l'élément structurel 5 lors de la mise en place du dispositif d'étanchéité.

Pour fabriquer le dispositif d'étanchéité 10, on peut procéder de la manière suivante. Dans une première étape, on fabrique l'armature 13 par injection d'un premier matériau dans le moule 30 d'injection, notamment du polypropylène. Dans une deuxième étape, on termine la fabrication de la pince en injectant un deuxième matériau dans le moule 30. Le deuxième matériau recouvre partiellement l'armature et forme le revêtement. Lorsque la deuxième étape est terminée, on peut démouler facilement la pince obtenue. En référence à la figure 7, la première partie 31 du moule est écartée vers le haut. La deuxième partie 32 du moule est écartée vers le bas. La troisième partie 33 du moule est écartée vers la droite, les protubérance 34 étant dégagées au travers des fenêtres 27. Le démoulage est possible sans contraindre l'armature ou le revêtement de la pince, notamment sans contraindre le crochet. Ce procédé, dit de bi-injection, permet finalement d'obtenir une pince composée de deux matériaux distincts et fermement fixés l'un à l'autre.

Ensuite on peut positionner une lèvre d'étanchéité en appui contre le redent 22. Une fois la lèvre d'étanchéité correctement positionnée, on peut la souder à l'armature par différents points de soudure sur la partie inférieure de la première branche et de la lèvre d'étanchéité. On obtient ainsi un dispositif d'étanchéité prêt à être assemblé sur un bord d'une structure de portière d'un véhicule. Pour fixer le dispositif d'étanchéité à la portière on peut l'insérer verticalement sur le bord concerné. Le crochet glisse le long de l'élément structurel 5 jusqu'à atteindre l'ouverture 15, il prend alors appui sur le bord supérieur de l'ouverture 15 pour retenir verticalement le dispositif d'étanchéité contre l'élément structurel. Après montage, le moyen de retenue 26 vient en appui sur le bord supérieur de l'ouverture 15. Le revêtement 14 recouvre partiellement l'élément de carrosserie et la lèvre d'étanchéité 12 prend appui contre les vitres 6, 7. L'élément structurel s'étendant dans un plan entre le bord 8 et le bord supérieur des ouvertures 15, on obtient un assemblage particulièrement simple et compact.

Finalement, on obtient grâce à l'invention un dispositif d'étanchéité dont la pince est facile à démouler. Le dispositif d'étanchéité est compatible avec une fixation simple et fiable à un bord d'une structure de portière. Son aspect esthétique peut être facilement contrôlé. Enfin, il permet de garantir une bonne étanchéité de l'interface entre la structure de portière et la vitre.

## Revendications

1. Dispositif d'étanchéité (10) pour une vitre (6,7) d'un véhicule automobile, comprenant une pince (11) bi-injectée, la pince comprenant une armature (13) et un revêtement (14) recouvrant au moins en partie l'armature, l'armature comprenant une première branche (18) et une deuxième branche (19) destinées à s'étendre de part et d'autre d'un bord (8) d'une structure (3), une première branche (18) de l'armature comprenant un moyen de retenue (26) apte à coopérer avec une ouverture (15) de la structure (3) pour retenir le dispositif d'étanchéité contre la structure (3), le dispositif d'étanchéité étant **caractérisé en ce que** la première branche (18) comprend une fenêtre (27) s'étendant au-dessus du moyen de retenue (26), sur toute la hauteur de la première branche.

2. Dispositif d'étanchéité (10) selon la revendication précédente, **caractérisé en ce que** le revêtement (14) recouvre une face externe de la deuxième branche (19) de l'armature.

3. Dispositif d'étanchéité (10) selon l'une des revendications précédentes, **caractérisé en ce que** l'armature (13) comprend une base (20) s'étendant entre la première branche (18) et la deuxième branche (19), la base s'étendant sensiblement perpendiculairement à la première branche et/ou à la deuxième branche, le revêtement (14) recouvrant une face externe de ladite base.

4. Dispositif d'étanchéité (10) selon l'une des revendications précédentes, **caractérisé en ce qu'**il comprend une lèvre d'étanchéité (12) destinée à entrer en contact avec une vitre (6, 7), la lèvre d'étanchéité étant fixée, notamment soudée, à une face externe de la première branche (18).

5. Dispositif d'étanchéité (10) selon la revendication précédente, **caractérisé en ce que** la première branche (18) comprend un redent (22) agencé à une extrémité inférieure de la première branche, la lèvre d'étanchéité (12) étant positionnée en contact avec ledit redent.

6. Dispositif d'étanchéité (10) selon l'une des revendications précédentes, **caractérisé en ce que** la première branche comprend une face interne s'étendant globalement parallèlement à un plan de référence (P1) à hauteur de la fenêtre, et **en ce que** le moyen de tenue (26) est saillant vers la deuxième branche (19) par rapport au plan de référence.

7. Dispositif d'étanchéité (10) selon l'une des revendications précédentes, **caractérisé en ce que** l'armature (13) est constituée d'un matériau plastique dur, notamment du polypropylène, et **en ce que** le revêtement (14) est constitué d'un matériau plus souple, notamment du thermoplastique.

8. Dispositif d'étanchéité (10) selon l'une des revendications précédentes, **caractérisé en ce qu'**une face interne de la premier branche et/ou une face interne de la deuxième branche comprend des reliefs (25) destinés à prendre appui sur la structure (3).

9. Dispositif d'étanchéité (10) selon l'une des revendications précédentes, **caractérisé en ce que** la première branche (18) comprend deux fentes (35) agencées de part et d'autre de la fenêtre (27), les deux fentes (35) s'étendant depuis une extrémité inférieure de la première branche.

10. Equipement de portière pour véhicule automobile, **caractérisée en ce qu'**il comprend une structure comprenant un bord (8) et une ouverture (15), une vitre (6, 7), notamment une vitre mobile en translation entre une position ouverte et une position fermée, et un dispositif d'étanchéité (10) selon l'une des revendications précédentes, le dispositif d'étanchéité comprenant une lèvre d'étanchéité (12) en contact avec la vitre, le moyen de retenue (26) du dispositif d'étanchéité coopérant avec l'ouverture (15) pour retenir le dispositif d'étanchéité contre la structure (3).

11. Equipement de portière selon la revendication précédente, **caractérisée en ce que** la structure (3) comprend une face s'étendant du bord (8) jusqu'à l'ouverture (15), la face s'étendant globalement parallèlement à un plan.

12. Portière pour véhicule automobile, **caractérisée en ce qu'**elle comprend un dispositif d'étanchéité selon l'une des revendications 1 à 9, et/ou un équipement de portière selon la revendication 10 ou 11.

13. Véhicule automobile, **caractérisé en ce qu'**il comprend un dispositif d'étanchéité selon l'une des revendication 1 à 9, et/ou un équipement de portière selon la revendication 10 ou 11, et/ou une portière selon la revendication précédente.

## Patentansprüche

1. Abdichtvorrichtung (10) für eine Fensterscheibe (6, 7) eines Kraftfahrzeugs, welche eine bi-injizierte Klammer (11) umfasst, wobei die Klammer eine Armierung (13) und eine Beschichtung (14), welche die Armierung wenigstens teilweise bedeckt, umfasst, wobei die Armierung einen ersten Schenkel (18) und einen zweiten Schenkel (19) umfasst, die dazu bestimmt sind, sich beiderseits eines Randes (8) einer Struktur (3) zu erstrecken, wobei ein erster Schenkel (18) der Armierung ein Haltemittel (26) umfasst, das geeignet ist, mit einer Öffnung (15) der Struktur (3) zusammenzuwirken, um die Abdichtvorrichtung in Anlage an der Struktur (3) zu halten, wobei die Abdichtvorrichtung **dadurch gekennzeichnet ist, dass** der erste Schenkel (18) ein Fenster (27) umfasst, das sich oberhalb des Haltemittels (26) auf der gesamten Höhe des ersten Schenkels erstreckt.

2. Abdichtvorrichtung (10) nach dem vorhergehenden Anspruch, **dadurch gekennzeichnet, dass** die Beschichtung (14) eine Außenseite des zweiten Schenkels (19) der Armierung bedeckt.

3. Abdichtvorrichtung (10) nach einem der vorhergehenden Ansprüche, **dadurch gekennzeichnet, dass** die Armierung (13) einen Basisteil (20) umfasst, der sich zwischen dem ersten Schenkel (18) und dem zweiten Schenkel (19) erstreckt, wobei sich der Basisteil im Wesentlichen senkrecht zum ersten Schenkel und/oder zum zweiten Schenkel erstreckt, wobei die Beschichtung (14) eine Außenseite des Basisteils bedeckt.

4. Abdichtvorrichtung (10) nach einem der vorhergehenden Ansprüche, **dadurch gekennzeichnet, dass** sie eine Dichtlippe (12) umfasst, die dazu bestimmt ist, mit einer Fensterscheibe (6, 7) in Kontakt zu kommen, wobei die Dichtlippe an einer Außenseite des ersten Schenkels (18) befestigt, insbesondere angeschweißt ist.

5. Abdichtvorrichtung (10) nach dem vorhergehenden Anspruch, **dadurch gekennzeichnet, dass** der erste Schenkel (18) einen Absatz (22) umfasst, der an einem unteren Ende des ersten Schenkels angeordnet ist, wobei die Dichtlippe (12) in Kontakt mit dem Absatz positioniert ist.

6. Abdichtvorrichtung (10) nach einem der vorhergehenden Ansprüche, **dadurch gekennzeichnet, dass** der erste Schenkel eine Innenseite umfasst, die sich im Wesentlichen parallel zu einer Referenzebene (P1) auf der Höhe des Fensters erstreckt, und dadurch, dass das Haltemittel (26) in Bezug auf die Referenzebene zum zweiten Schenkel (19) hin vorsteht.

7. Abdichtvorrichtung (10) nach einem der vorhergehenden Ansprüche, **dadurch gekennzeichnet, dass** die Armierung (13) aus einem harten Kunststoff besteht, insbesondere aus Polypropylen, und dadurch, dass die Beschichtung (14) aus einem flexibleren Material besteht, insbesondere aus Thermoplast.

8. Abdichtvorrichtung (10) nach einem der vorhergehenden Ansprüche, **dadurch gekennzeichnet, dass** eine Innenseite des ersten Schenkels und/oder eine Innenseite des zweiten Schenkels Erhebungen (25) umfassen, die dazu bestimmt sind, sich auf der Struktur (3) abzustützen.

9. Abdichtvorrichtung (10) nach einem der vorhergehenden Ansprüche, **dadurch gekennzeichnet, dass** der erste Schenkel (18) zwei Schlitze (35) umfasst, die beiderseits des Fensters (27) angeordnet sind, wobei sich die zwei Schlitze (35) von einem unteren Ende des ersten Schenkels aus erstrecken.

10. Türausrüstung für ein Kraftfahrzeug, **dadurch gekennzeichnet, dass** sie eine Struktur, die einen Rand (8) und eine Öffnung (15) umfasst, eine Fensterscheibe (6, 7), insbesondere eine zwischen einer geöffneten Position und einer geschlossenen Position translatorisch bewegbare Fensterscheibe, und eine Abdichtvorrichtung (10) nach einem der vorhergehenden Ansprüche umfasst, wobei die Abdichtvorrichtung eine mit der Fensterscheibe in Kontakt stehende Dichtlippe (12) umfasst, wobei das Haltemittel (26) der Abdichtvorrichtung mit der Öffnung (15) zusammenwirkt, um die Abdichtvorrichtung in Anlage an der Struktur (3) zu halten.

11. Türausrüstung nach dem vorhergehenden Anspruch, **dadurch gekennzeichnet, dass** die Struktur (3) eine Seite umfasst, die sich vom Rand (8) bis zur Öffnung (15) erstreckt, wobei sich die Seite im Wesentlichen parallel zu einer Ebene erstreckt.

12. Tür für ein Kraftfahrzeug, **dadurch gekennzeichnet, dass** sie eine Abdichtvorrichtung nach einem der Ansprüche 1 bis 9 und/oder eine Türausrüstung nach Anspruch 10 oder 11 umfasst.

13. Kraftfahrzeug, **dadurch gekennzeichnet, dass** es eine Abdichtvorrichtung nach einem der Ansprüche 1 bis 9 und/oder eine Türausrüstung nach Anspruch 10 oder 11 und/oder eine Tür nach dem vorhergehenden Anspruch umfasst.

## Claims

1. Sealing device (10) for a pane (6, 7) of a motor vehicle, comprising a clamp (11) formed by two-shot injection moulding, the clamp comprising a reinforcement (13) and a lining (14) at least partially covering the reinforcement, the reinforcement comprising a first leg (18) and a second leg (19), which are intended to extend on either side of an edge (8) of a structure (3), a first leg (18) of the reinforcement comprising a holding means (26), which can interact with an opening (15) of the structure (3) in order to hold the sealing device against the structure (3), the sealing device being **characterized in that** the first leg (18) comprises a window (27) extending above the holding means (26) over the entire height of the first leg.

2. Sealing device (10) according to the preceding claim, **characterized in that** the lining (14) covers an outer face of the second leg (19) of the reinforcement.

3. Sealing device (10) according to either of the preceding claims, **characterized in that** the reinforcement (13) comprises a base (20) extending between the first leg (18) and the second leg (19), the base extending substantially perpendicularly to the first leg and/or to the second leg, the lining (14) covering an outer face of said base.

4. Sealing device (10) according to one of the preceding claims, **characterized in that** it comprises a sealing lip (12) intended to come into contact with a pane (6, 7), the sealing lip being fastened, in particular welded, to an outer face of the first leg (18).

5. Sealing device (10) according to the preceding claim, **characterized in that** the first leg (18) comprises a step (22) arranged at a lower end of the first leg, the sealing lip (12) being positioned in contact with said step.

6. Sealing device (10) according to one of the preceding claims, **characterized in that** the first leg comprises an inner face extending generally parallel to a reference plane (P1) at the height of the window, and **in that** the holding means (26) projects towards the second leg (19) with respect to the reference plane.

7. Sealing device (10) according to one of the preceding claims, **characterized in that** the reinforcement (13) consists of a hard plastics material, in particular polypropylene, and **in that** the lining (14) consists of a softer material, in particular thermoplastic.

8. Sealing device (10) according to one of the preceding claims, **characterized in that** an inner face of the first leg and/or an inner face of the second leg comprises reliefs (25) intended to bear against the structure (3).

9. Sealing device (10) according to one of the preceding claims, **characterized in that** the first leg (18) comprises two slots (35) arranged on either side of the window (27), the two slots (35) extending from a lower end of the first leg.

10. Motor vehicle door apparatus, **characterized in that** it comprises a structure comprising an edge (8) and an opening (15), a pane (6, 7), in particular a pane that can move in translation between an open position and a closed position, and a sealing device (10) according to one of the preceding claims, the sealing device comprising a sealing lip (12) in contact with the pane, the holding means (26) of the sealing device interacting with the opening (15) in order to hold the sealing device against the structure (3).

11. Door apparatus according to the preceding claim, **characterized in that** the structure (3) comprises a face extending from the edge (8) to the opening (15), the face extending generally parallel to a plane.

12. Motor vehicle door, **characterized in that** it comprises a sealing device according to one of Claims 1 to 9 and/or a door apparatus according to Claim 10 or 11.

13. Motor vehicle, **characterized in that** it comprises a sealing device according to one of Claims 1 to 9 and/or a door apparatus according to Claim 10 or 11 and/or a door according to the preceding claim.
